**Europäisches Patentamt**

**European Patent Office**

**Office européen des brevets**

(11) Numéro de publication : **0 359 671 B1**

(12) **FASCICULE DE BREVET EUROPEEN**

(45) Date de publication du fascicule du brevet :
**11.03.92 Bulletin 92/11**

(51) Int. Cl.$^5$ : **B65G 49/06**

(21) Numéro de dépôt : **89402531.1**

(22) Date de dépôt : **15.09.89**

(54) **Installation pour le relevage et l'empilage ou le désempilage de plaques de verre.**

(30) Priorité : **15.09.88 FR 8812053**

(43) Date de publication de la demande :
**21.03.90 Bulletin 90/12**

(45) Mention de la délivrance du brevet :
**11.03.92 Bulletin 92/11**

(84) Etats contractants désignés :
**AT BE CH DE ES FR GB GR IT LI LU NL SE**

(56) Documents cités :
**DE-A- 1 918 791**
**DE-A- 2 160 765**
**FR-A- 2 138 889**
**US-A- 4 093 083**

(73) Titulaire : **SOCIETE GENERALE POUR LES TECHNIQUES NOUVELLES S.G.N. Société anonyme dite:**
**1, rue des Hérons Montigny-le-Bretonneux**
**F-78184 Saint-Quentin-en-Yvelines Cédex (FR)**

(72) Inventeur : **Favre, Serge**
**Maison Ticon**
**F-40400 Tartas (FR)**

(74) Mandataire : **Le Roux, Martine et al**
**Cabinet Beau de Loménie 55, rue d'Amsterdam**
**F-75008 Paris (FR)**

Jouve, 18, rue Saint-Denis, 75001 PARIS

## Description

L'invention concerne une installation pour le relevage de plaques de verre, cette opération consistant à amener une plaque saisie dans une position sensiblement horizontale à une position sensiblement verticale, où elle est déposée, ce, afin de former des piles (empilage) ou bien à amener une plaque saisie dans une position sensiblement verticale sur une pile à une position sensiblement horizontale sur un convoyeur (désempilage).

Dans les unités de production, le verre est obtenu sous forme d'une bande (par le procédé "float glass" par exemple) qui est ensuite découpée en plaques.

La bande et les plaques sont véhiculées par un (ou plusieurs) convoyeur principal horizontal.

Ces plaques sont ensuite relevées à un poste dit de préhension pour être empilées sur des chariots de manutention munis de pupitres (comportant un plan sensiblement horizontal et un plan sensiblement vertical) sur lesquels elles viennent en appui.

La bande de verre étant directement découpée sur le convoyeur principal dans le sens longitudinal (sens de l'axe du convoyeur) et le sens transversal (sens perpendiculaire au sens longitudinal dans le plan du convoyeur), le débit en objets augmente et les machines de relevage doivent fonctionner à des cadences rapides (2 à 4 s) ou très rapides (de l'ordre de 2 s).

. Le brevet US-A-4,093,083 décrit une désempileuse à un bras (pouvant fonctionner en releveuse) comportant un système bielle-manivelle pour l'entraînement dudit bras et des vérins pneumatiques pour le mouvement des ventouses. Le système bielle-manivelle avec moteur ne permet pas de contrôler les accélérations et les décélérations, d'où des mouvements avec des chocs, ce que l'installation selon l'invention permet notamment d'éviter.

. Le dispositif décrit dans la demande FR-A-2 138 889 comprend principalement une table inclinable à l'extrémité d'un convoyeur. Le pivotement de ladite table, grâce à un arbre, induit le glissement des matériaux à empiler 'et leur positionnement sur l'élément récepteur.

. Le dispositif selon la demande DE-A-2 160 765 comporte, lui, un bras muni d'une ventouse. On notera toutefois que ledit bras, avant l'arrivée de chaque plaque à relever doit, pour saisir ladite plaque par en-dessous, traverser le plan du convoyeur. Une telle manoeuvre ne peut autoriser de cadence rapide. Par ailleurs, ledit bras n'effectue aucun mouvement selon son axe longitudinal.

. L'installation décrite dans la demande DE-A-1 918 791 comporte quatre parties A, B, C, D. Les plaques arrivent déjà centrées sur le convoyeur secondaire B, qui comporte des ventouses au niveau de ses rouleaux pour le maintien desdites plaques. Celui-ci tourne pour amener les plaques sur la partie C, elle-même tournante et munie de ventouses. A partir de ladite partie C, les plaques sont déposées sur le pupitre G. Cette installation qui comporte deux tables tournantes effectue le relevage des plaques en deux temps. Elle est conçue pour de grandes plaques et est incapable de fonctionner à des cadences très rapides (2 s).

Le brevet français FR-A-2 597 453 décrit une releveuse (machine de relevage) rapide compacte, dans laquelle des cadences de 2 à 4 s sont obtenues par multiplication du nombre de bras de préhension. Ainsi, dans cette releveuse selon l'art antérieur, il existe deux bras de préhension rétractables munis à chacune de leurs extrémités de moyens de préhension (ventouses), ce qui fait au total quatre points de préhension dont deux simultanément actifs (un par bras).

La présente invention propose une installation avec une releveuse plus rapide et de conception différente. Plus précisément, l'installation comporte pour l'empilage :

– un convoyeur secondaire placé dans le prolongement du convoyeur principal et sur lequel sont saisies les plaques à un poste de préhension,

– en bout et au-dessous dudit convoyeur secondaire, une releveuse comportant :

. au moins un bras comportant un support sur lequel sont fixées des ventouses reliées à un moyen de dépression et disposées de façon à passer entre les rouleaux du convoyeur secondaire pour saisir la plaque,

. un système de bielle-manivelle actionné par au moins un vérin moteur agissant sur le(s)dit(s) bras pour obtenir sa (leur) rotation d'un angle d'environ 90° autour d'un axe horizontal perpendiculaire à l'axe du convoyeur de façon à amener les plaques au poste de dépose,

– un pupitre constituant le poste de dépose déplaçable selon l'axe du convoyeur,

– des moyens pour la commande automatique notamment des vitesses de convoyage, de l'arrêt des plaques, des mouvements du (des) bras et du pupitre,

– ladite installation comportant en outre de façon caractéristique :

– au moins un vérin hydraulique équilibreur lié audit système bielle-manivelle et relié également à un accumulateur à azote de façon à amortir les mouvements du (des) bras et réduire la puissance énergétique installée,

– des moyens pour déplacer le(les) bras et/ou le support portant les ventouses selon l'axe longitudinal dudit (desdits) bras, pour la préhension et la dépose des plaques,

– des moyens pour déplacer latéralement le convoyeur secondaire d'une part et la releveuse d'autre part.

L'installation comporte pour le désempilage :

– un convoyeur secondaire, placé dans le prolongement du convoyeur principal et sur lequel sont déposées les plaques à un poste de dépose,

– en bout et au-dessous dudit convoyeur secondaire, une releveuse comportant :

. au moins un bras comportant un support sur lequel sont fixés des ventouses reliées à un moyen de dépression et disposées de façon à passer entre les rouleaux du convoyeur secondaire pour déposer la plaque,

. un système bielle-manivelle actionné par au moins un vérin moteur agissant sur le(s)dit(s) bras pour obtenir sa (leur) rotation d'un angle d'environ 90° autour d'un axe horizontal perpendiculaire à l'axe du convoyeur de façon à amener les plaques au poste de dépose,

– un pupitre constituant le poste de préhension déplaçable selon l'axe du convoyeur,

– des moyens pour la commande automatique notamment des vitesses de convoyage, de l'arrêt des plaques, des mouvements du (des) bras et du pupitre,

ladite installation comportant en outre de façon caractéristique :

– au moins un vérin hydraulique équilibreur lié audit système bielle-manivelle et relié également à un accumulateur à azote de façon à amortir les mouvements du (des) bras et réduire la puissance énergétique installée,

– des moyens pour déplacer le (les) bras et/ou le support portant les ventouses selon l'axe longitudinal dudit (desdits) bras, pour la préhension et la dépose des plaques,

– des moyens pour déplacer latéralement le convoyeur secondaire d'une part et la releveuse d'autre part.

Selon une autre caractéristique de l'invention, le déplacement sur le vérin moteur est commandé de façon à ce que la rotation du bras obéisse à la loi :

$$\alpha = A \left(\frac{t}{t_o}\right)^5 + B \left(\frac{t}{t_o}\right)^4 + C \left(\frac{t}{t_o}\right)^3$$

avec $\alpha$ = angle de rotation du bras

A,B,C = constantes numériques

La description sera mieux suivie à partir des figures :

– la figure 1 représente une vue de l'installation dans l'axe du convoyeur secondaire ;

– les figures 2A et 2B sont des vues latérales (perpendiculaires à l'axe du convoyeur) ;

– la figure 3 présente en coupe latérale le bras avec le support et les ventouses ;

– les figures 4 et 5 montrent mieux le système bielle-manivelle pour l'entraînement du bras ;

– et les figures 5 et 6 montrent l'accumulateur à azote.

Les plaques de verre défilent sur une ligne de convoyage. Pour être relevées, elles sont dérivées sur un ou des épis qui sont des convoyeurs disposés perpendiculairement à la ligne de convoyage principale, elles sont relevées alors par des machines de relevage situées en bout d'épi. On appellera convoyeur principal, le convoyeur véhiculant les plaques pour les amener à l'installation de relevage.

Cette installation selon l'invention comporte un convoyeur secondaire de longueur réduite (de l'ordre de 1 à 2 m par exemple) qui est placé dans le prolongement du convoyeur principal.

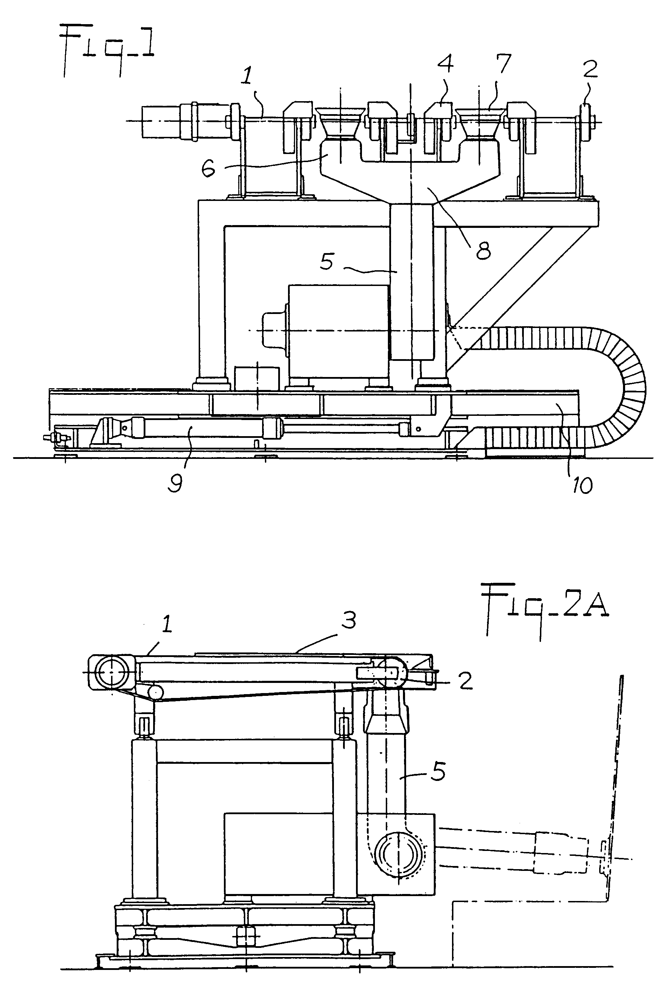

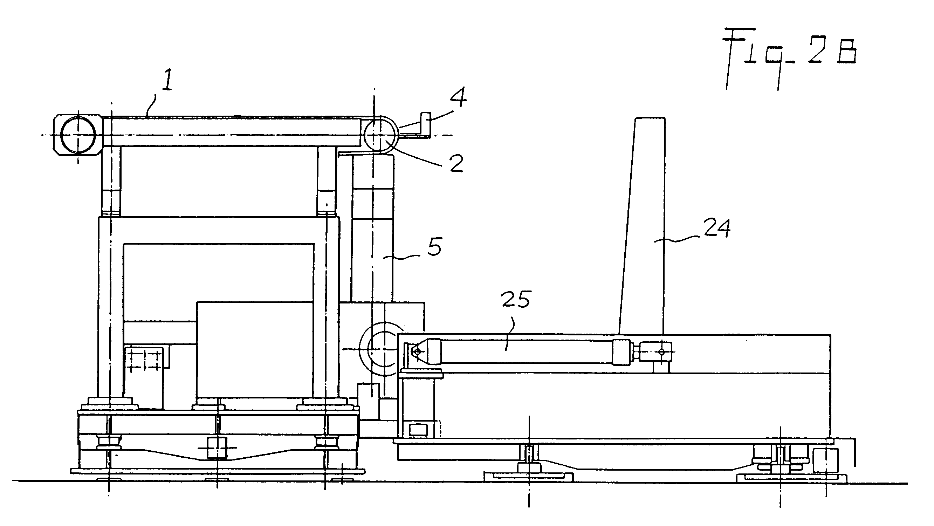

Sur les figures 1, 2A et 2B, le convoyeur secondaire est repéré en (1), il est muni de rouleaux (2) sur lesquels s'appuie la plaque (3). La plaque arrive ainsi en bout du convoyeur secondaire (1), elle s'arrête devant la releveuse à un poste dit de préhension.

Selon un mode de fonctionnement préféré, le convoyeur secondaire a une vitesse inférieure à celle du convoyeur principal, elle devient nulle lorsque la plaque est au poste de préhension.

Une plaque passe du convoyeur principal au convoyeur secondaire lorsque la plaque précédente a été saisie. Le nombre des épis est alors déterminé par l'homme du métier en fonction des cadences de relevage, des vitesses de convoyeur et des longueurs des plaques.

Au poste de préhension, les plaques consécutives de mêmes dimensions à relever se trouvent dans la même position.

– elles sont en appui contre des butées (4) disposées en bout du convoyeur secondaire ;

– dans une même campagne de production, les plaques à relever ont les mêmes dimension et on constate que leurs bords latéraux sont pratiquement alignés pendant un certain temps (le dévirage, c'est-à-dire le décalage, étant de l'ordre de 10 mm sur 3 heures) ;

On a donc, pendant le temps de formation d'une pile, des plaques ayant toujours la même position au niveau de leur bord inférieur (celui qui viendra en appui sur la surface quasi horizontale du pupitre) et de leurs bords latéraux.

L'installation de relevage selon l'invention comporte également une releveuse placée au-dessous et en bout du convoyeur secondaire.

Elle comporte au moins un bras (5) comportant un support (8) sur lequel sont fixées des ventouses (7).

Selon le mode de réalisation figure 1, elle a un seul bras (5) terminé par deux doigts (6) porteurs chacun d'une ventouse (7), les doigts étant portés par un support (8).

Si la largeur du convoyeur secondaire est importante, on peut prévoir plusieurs bras, par exemple deux, montés côte à côte.

Le nombre de bras, de ventouses et la largeur du support sont déterminés par l'homme du métier en fonction des dimensions des plaques à relever.

Les doigts (6) ont une longueur suffisante pour permettre le passage des ventouses entre les rouleaux (2).

Pour que les plaques soient en équilibre lors du relevage, il est nécessaire :

– qu'elles soient placées de façon à ce que les ventouses soient disposées symétriquement de part et d'autre de l'axe longitudinal de symétrie des plaques à relever,

– et que la releveuse ou les butées (4) soient longitudinalement déplacées pour que les centres des ventouses soient proches de l'axe médian de la plaque (axe perpendiculaire à l'axe longitudinal et passant par le milieu de la plaque).

Pour vérifier la première condition, avant chaque campagne (correspondant à des mêmes dimensions de plaques), la releveuse et/ou le convoyeur secondaire sont latéralement déplacés.

Lorsque l'écartement entre les rouleaux du convoyeur secondaire permet juste le passage des doigts (6) (disposition avantageuse), le convoyeur secondaire et la releveuse doivent être déplacés simultanément. On peut utiliser par exemple (figure 1) un vérin (9) agissant sur un bâti 10 mobile latéralement (dans des rails par exemple), ledit bâti supportant le convoyeur secondaire et la releveuse, et ledit bâti étant également muni de moyens pour son immobilisation.

On remarque que l'écartement entre les doigts (6) dépend non seulement de l'écartement entre deux rouleaux consécutifs du convoyeur mais aussi dépend de la largeur (sens perpendiculaire à l'axe du convoyeur) des plaques et qu'on ne peut augmenter inconsidérément cet écartement. On ne peut également pas admettre que la plaque de verre déborde latéralement la ventouse de façon importante.

De telles releveuses fonctionnent bien pour des plaques de verre appelées de petites dimensions dans l'industrie verrière, c'est-à-dire jusqu'à de l'ordre de 1,5 m en largeur et 1 m en longueur et les plaques au poste de préhension étant situées à plus de 25 mm du bord latéral du convoyeur.

Le mode de réalisation figure 1 (un seul bras avec deux doigts et deux ventouses) est particulièrement bien adapté à cette application.

L'homme du métier déterminera l'écartement entre les doigts et les rouleaux du convoyeur secondaire en fonction des plaques qu'il aura à traiter.

Les ventouses sont de type connu, elles sont reliées à un système de mise en dépression grâce auquel un effet de succion est obtenu dans la ventouse et la plaque de verre est saisie. Pour lâcher la plaque, il suffit de couper le vide en se remettant à la pression atmosphérique.

Chaque ventouse est montée sur un ressort qui lui permet de s'adapter aux plaques d'épaisseur différente.

Pour éviter les butées (4) lors du relevage de la plaque, on dispose de deux solutions prises séparément ou en combinaison, consistant en :

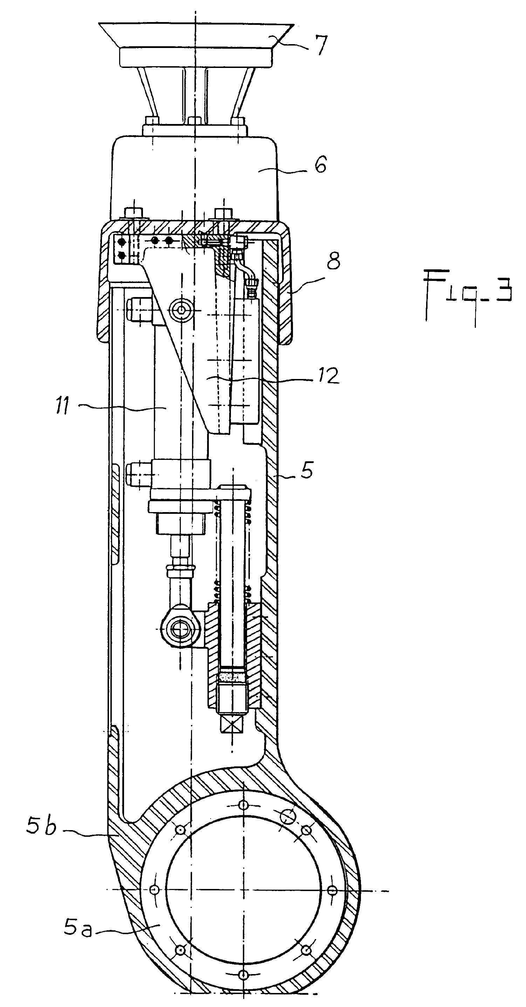

Première solution :     des moyens pour faire coulisser le support (8) le long du bras (5) (figure 3);

Deuxième solution :     des moyens pour déplacer le bras (5) selon son axe longitudinal.

Dans la première solution, ce déplacement est obtenu par exemple au moyen d'un vérin (11) à petite course automatiquement commandé monté dans le bras (5) pour agir sur le support (8). Dans le mode de réalisation de la figure 3, la tige du vérin (9) est solidarisée à une languette (12) fixée au support (8). Ledit support entoure l'extrémité supérieure du bras (5) sur une certaine distance, de sorte que, même en position relevée (tige de vérin sortie), le support (8) coiffe encore le bras (5), ce afin d'éviter l'entrée de poussière (de verre notamment) dans le bras.

D'une façon générale, tous les moyens d'actionnement sont à l'intérieur du bras pour être protégés, seuls les moyens d'alimentation en énergie sont ou ont une sortie à l'extérieur (canalisations pour fluides par exemple).

Dans la deuxième solution, ce déplacement est obtenu par exemple au moyen d'un vérin avec un excentrique agissant sur l'extrémité du bras non porteuse de ventouses.

Dans ces deux solutions, le bras (5) et/ou le support (8) est relevé pour la saisie de la plaque, et il est ensuite ramené à sa position initiale pendant la rotation du bras, avant ou après dépose selon la position du poste de dépose.

Pour des raisons de cadences, d'encombrement de la plaque en relevage, et de facilité de dépose, on préfère ramener à la position initiale pendant la rotation du bras avant dépose, puis à nouveau déplacer le support ou le bras pour la dépose, et enfin, le ramener à la position initiale pendant la rotation après dépose pour pouvoir prendre une nouvelle plaque déjà en position au poste de préhension.

L'autre extrémité du bras (5) est entraînée en rotation entre la position correspondant au bras, au poste de préhension et celle correspondant au bras en position au poste de dépose (fig. A2).

Les plans du convoyeur et du pupitre étant sensiblement horizontaux, l'angle de rotation est légèrement supérieur à 90° (en général entre 90° et 95°).

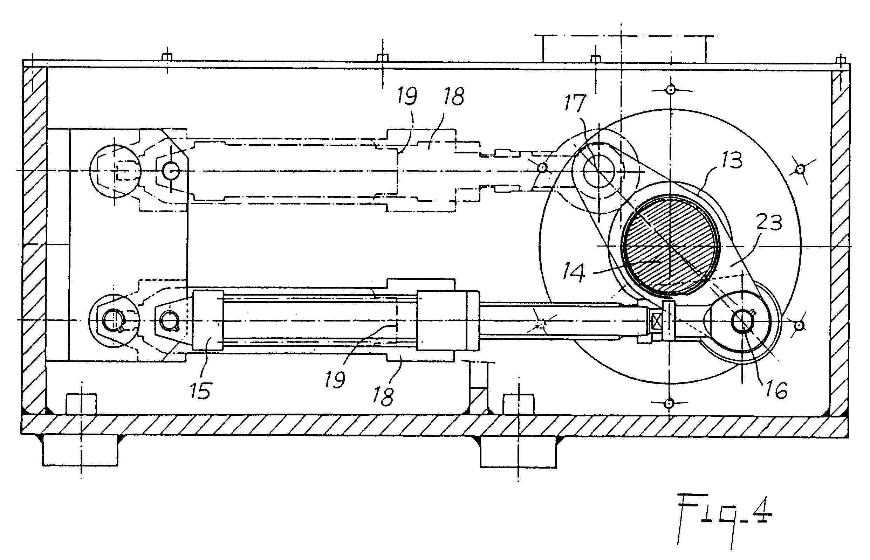

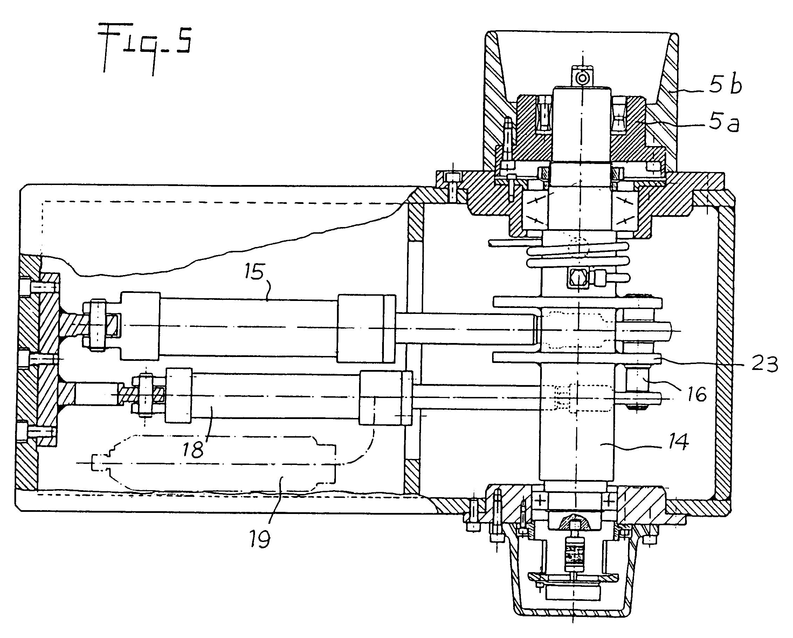

Selon l'invention, la rotation est obtenue au moyen d'un système bielle-manivelle (13) (fig. 4) monté sur un arbre d'entraînement (14) fixé au bras (5) par exemple par solidarisation aux pièces (5a) et (5b) représentées figures 3 et 5.

Un vérin moteur (15) (de préférence hydraulique) solidaire du maneton (16) de la bielle (23) (figure 4) agit sur l'arbre d'entraînement (14) qui lui-même entraîne en rotation le bras (5). On peut également prévoir un second vérin moteur (15( solidaire du maneton (17) de la bielle (23), un vérin étant actif pour la descente de la plaque (rotation du bras dans un sens) et l'autre pour la remontée du bras (retour). Cette possibilité n'est pas représentée sur les figures.

Selon l'invention, au moins un vérin hydraulique équilibreur (18) est monté sur le système bielle-manivelle (13).

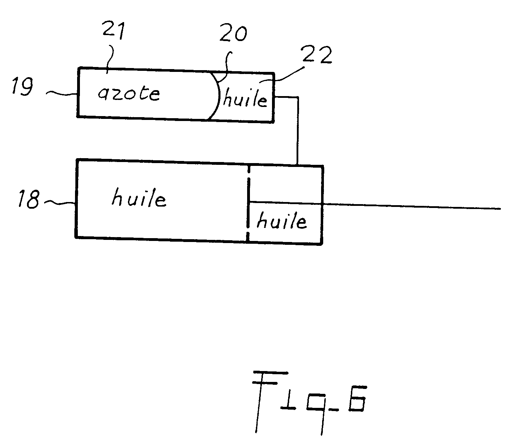

Ce vérin (18) comporte un piston percé qui permet alors le passage de l'huile d'un compartiment d'un vérin à l'autre selon le mouvement de la tige du piston (fig. 6).

Le vérin (18) est également relié à un accumulateur à azote (19) constitué par un récipient muni d'une paroi mobile (20) le séparant en deux chambres, l'une (21) est fermée et contient l'azote, l'autre (22) est reliée au vérin (18).

Un vérin équilibreur (18) est nécessairement monté sur le même maneton que le vérin moteur (15) de façon à ce que l'énergie accumulée lors de la descente du bras pour amener la plaque au poste de dépose soit restituée lors de la remontée dudit bras, cette énergie accumulée étant d'autant plus grande que la plaque qui descend devient motrice à partir d'un certain angle. Cette réalisation est représentée figure 4, le vérin (18) étant en traits pleins.

Un second vérin (18) peut être ajouté, il est alors solidarisé au maneton (17) de la bielle (23). Sur la figure 4, cette disposition correspond au vérin (18) en pointillés.

Le déplacement de la tige du vérin moteur (15) provoque également le coulissement de la tige du vérin équilibreur (18).

Le piston de ce vérin étant percé, l'huile communique d'une chambre à l'autre dans le vérin (15) et communique avec la chambre (22) de l'accumulateur.

Si on se réfère à la schématisation en traits pleins de la figure 4, lorsque le bras tourne pour amener la plaque du poste de préhension au poste de saisie, la tige du vérin (15) rentre, l'huile du vérin (18) chassée par la rentrée de la tige de ce vérin va fuir dans la chambre (22) de l'accumulateur. Au retour du bras, cette énergie est restituée : l'huile repart dans le vérin (18) provoquant la rentrée de son piston qui actionne alors la bielle (23), la rotation du bras (5) est obtenue pour des pressions des vérins moteur et équilibreur convenablement choisies par l'homme de métier.

Ce dispositif avantageux permet l'amortissement des mouvements (rôle d'équilibreur) mais également de diminuer la puissance installée (rôle de récupérateur d'énergie).

Les essais faits sur la machine ont pu montrer qu'il est particulièrement avantageux d'avoir pour la rotation du bras la loi de mouvement suivante :

$$\alpha = A \left(\frac{t}{t_o}\right)^5 + B \left(\frac{t}{t_o}\right)^4 + C \left(\frac{t}{t_o}\right)^3$$

avec $\alpha$ = angle de rotation du bras,

A,B,C = constantes déterminées expérimentalement, de façon à optimiser les accélérations et décélérations du bras pour garantir les cadences et l'absence de chocs.

Le vérin moteur est alors automatiquement commandé pour générer cette loi sur le bras.

Le poste de dépose es constitué par un pupitre (24) possédant un plan sensiblement horizontal et un plan sensiblement vertical pour l'appui des plaques. Le pupitre est positionné lorsqu'il arrive vide de façon à être dans l'axe longitudinal des plaques et dans celui du bras.

Son plan horizontal est situé à une hauteur légèrement inférieure à celle du bord inférieur de la plaque qui arrive, la plaque lâchée par les ventouses chutant pour la dépose sur ledit plan.

La hauteur de chute admissible est donnée par l'exploitant verrier en fonction du matériau et de l'épaisseur de la plaque.

Pour améliorer l'empilage des plaques, de l'air peut être soufflé par les ventouses pour plaquer le verre contre la pile existante.

Après chaque dépose, le pupitre est déplacé pas à pas dans le sens de l'axe du convoyeur par exemple par un vérin (25), d'une valeur prédéterminée en fonction de l'épaisseur des plaques.

L'installation comporte également des moyens pour sa commande automatique à partir d'informations fournies notamment par des capteurs disposés sur l'installation traitées par un ordinateur muni d'un logiciel. Sont notamment réglés automatiquement les vitesses de convoyage, l'arrêt des plaques au poste de préhension, la rotation du bras, le déplacement pas à pas du pupitre, son évacuation et sa mise en place, les déplacements latéraux de la releveuse et du convoyeur secondaire. . .

Une telle installation a permis le relevage très rapide (de l'ordre de 2 s et même moins de 2 s) de plaques de verre de :

- largeur    600 mm à 1 200 mm

- longueur   400 mm à   800 mm

- épaisseur    2 mm à     8 mm

avec des piles d'épaisseur maximale 475 mm, la vitesse d'introduction sur le convoyeur secondaire étant de 60 m/mn, ce pour une puissance installée pour la rotation du bras de l'ordre de 5 kw.

L'invention a été décrite pour l'empilage de plaques de verre, elle est utilisable pour le désempilage de plaques de verre sans apporter de modifications mécaniques à l'installation, seules des modifications du logiciel de commande sont nécessaires.

Il est alors évident pour l'homme de métier que :

– le poste de préhension est constitué par le pupitre (24),

– le poste de dépose est constitué par le convoyeur principal qui peut alors défiler sans arrêt.


**Revendications**

1. Installation pour le relevage rapide et l'empilage de plaques de verre-défilant sur un convoyeur principal horizontal, ainsi que pour le désempilage et le relevage rapide de plaques de verre, stockées en pile, comportant :

– un convoyeur secondaire (1) placé dans le prolongement dudit convoyeur principal et sur lequel sont saisies les plaques (3) à un poste de préhension ou déposées les plaques (3) à un poste de dépose,

– en bout et au-dessous dudit convoyeur secondaire (1), une releveuse comportant :

. au moins un bras (5) comportant un support (8) sur lequel sont fixées des ventouses (7) reliées à un moyen de dépression et disposées de façon à passer entre les rouleaux (2) du convoyeur secondaire pour saisir ou déposer lesdites plaques,

. un système bielle-manivelle (13) actionné par au moins un vérin moteur (15) agissant sur le(s)dit(s) bras pour obtenir sa (leur) rotation d'un angle d'environ 90° autour d'un axe horizontal perpendiculaire à l'axe du convoyeur de façon à amener lesdites plaques, après leur saisie, à leur poste de dépose,

– un pupitre (24) constituant le poste de dépose ou le poste de préhension déplaçable selon l'axe du convoyeur,

– des moyens pour la commande automatique notamment des vitesses de convoyage, de l'arrêt des plaques, des mouvements du (des) bras et du pupitre,

caractérisée en ce qu'elle comporte en outre :

– au moins un vèrin hydraulique équilibreur (18) lié audit système bielle-manivelle (13) et relié également à un accumulateur à azote (19) de façon à amortir les mouvements du (des) bras et réduire la puissance énergétique installée,

– des moyens pour déplacer le(les) bras (5) et/ou le support (8) portant les ventouses (7) selon l'axe longitudinal dudit(desdits) bras, pour la préhension et la dépose des plaques,

– des moyens pour déplacer latéralement le convoyeur secondaire d'une part et la releveuse d'autre part.

2. Installation selon la revendication 1 caractérisée en ce que le support (8) coulisse sur le bras (5) sur une distance suffisant au moins à éviter lors du relevage les butées (4) sur lesquelles la plaque est en appui au poste de préhension.

## Patentansprüche

1. Vorrichtung zum schnellen Anheben und Stapeln von Glasscheiben, die auf einem horinzontalen Hauptförderband vorbeiziehen, sowie für das Entstapeln und schnelle Anheben von Glasscheiben, die gestapelt sind, mit:

– einem zweiten Förderband (1), das in der Verlängerung des Hauptförderers oder Hauptförderbands angeordnet ist, und auf dem die Platten (3) bei einer Auf- oder Mitnahmestelle ergriffen werden oder die Platten (3) bei einer Ablagestelle abgelegt werden,

– am Ende und unterhalb des zweiten Förderbands (1) einer Hebevorrichtung mit:

. wenigstens einem Arm (5), der eine Stütze (8) aufweist, auf der Saugnäpfe (7) befestigt sind, die mit einer Unterdruckeinrichtung verbunden sind, und derart angeordnet sind, daß sie zwischen den Rollen (2) des zweiten Förderbands hindurchgehen, um die Platten zu ergreifen oder abzulegen,

. einem System Pleuel-Kurbel (13), das durch wenigstens einen Stellmotor (15) betätigt wird, der auf den Arm oder die Arme wirkt, um seine (ihre) Drehung um einen Winkel von ungefähr 90° um eine horizontale zur Achse des Förderbands senkrechte Achse derart zu erhalten, daß die Scheiben, nachdem sie herausgezogen wurden, zu ihrer Ablagestelle mitgenommen werden.

– einem Pult (24), das die Ablagestelle oder die Aufnahmestelle bildet, das entlang der Achse des Förderbandes bewegbar ist,

– Einrichtungen für die automatische Steuerung, insbesondere der Fördergeschwindigkeiten, des Anhaltens der Scheiben, der Bewegungen des (der) Arms (Arme) und des Pults,

**dadurch gekennzeichnet,** daß sie weiterhin aufweist:

– wenigstens einen hydraulischen Ausgleichsstelltrieb (18), der mit dem System Pleuel-Kurbel (13) verbunden ist, und ebenfalls mit einem Stickstoffakkumulator (19) derart verbunden ist, um die Bewegungen des (der) Arms (Arme) zu dämpfen und die angeordnete Energiekraft zu reduzieren,

– Einrichtungen zum Bewegen des (der) Arms (Arme) (5) und/oder der Stütze (8), die die Saugnäpfe (7) trägt, entlang einer Längsachse des (der) Arms (Arme), für die Aufnahme und das Ablegen der Scheiben,

– Einrichtungen zum seitlichen Bewegen des zweiten Förderbands einerseits und der Anhebevorrichtung andererseits.

2. Vorrichtung nach Anspruch 1, **dadurch gekennzeichnnet,** daß die Stütze (8) auf dem Arm (5) über einen Abstand gleitet, der wenigstens ausreicht, um beim Anheben die Anschläge (4), auf denen sich die Platte bei der Aufnahmestelle abstützt, zu vermeiden.

## Claims

1. Installation for rapidly lifting and stacking sheets of glass advancing on a horizontal principal conveyor, as well as for unstacking and rapid lifting of sheets of glass, stacked into a pile, comprising:

– a secondary conveyor (1) placed in line with said principal conveyor and on which the sheets (3) are gripped at a gripping station, or deposited at a deposit station,

– at the end of and below said secondary conveyor, an elevator comprising:

. at least one arm (5) comprising a support (8) on which are fixed suction cups (7) connected to a vacuum-producing means and disposed so as to pass between the rollers (2) of the secondary conveyor to grip or deposit said sheets,

. a connecting rod-crank system (13) actuated by at least one motive jack (15) acting on said arm(s) in order to obtain rotation thereof through an angle of about 90° about a horizontal axis perpendicular to the axis of the conveyor so as to bring the sheets after their gripping to their deposit station,

– a panel (24) constituting the deposit station or the gripping station, displaceable along the axis of the conveyor,

– means for automatically controlling, in particular the speeds of conveying, the halt of the sheets, the movements of the arm(s) and of the panel, characterized in that it further comprises:

– at least one hydraulic balancing jack (18) connected to said connecting rod-crank system (13) and also connected to a nitrogen accumulator (19) so as to dampen the movements of the arm(s) and to reduce the installed energetic power,

– means for displacing the arm(s) (5) and/or the support (8) bearing the suction cups (7) along the longitudinal axis of said arm(s), for gripping and depositing the sheets,

– means for laterally displacing the secondary conveyor on the one hand and the elevator on the other hand.

2. Installation according to claim 1, characterized in that the support (8) slides on the arm (5) over a distance at least sufficient to avoid, during lifting, the stops (4) on which the sheet is in abutment at the gripping station.

Fig.1

Fig.2A

Fig. 2B

EP 0 359 671 B1

Fig_3

Fig. 4

Fig. 5

21    20    22

19 — | azote | huile |

18 — | huile | huile |

Fig. 6